(19) Europäisches Patentamt
European Patent Office
Office européen des brevets

(11) EP 4 627 921 A1

(12) EUROPEAN PATENT APPLICATION

(43) Date of publication:
**08.10.2025 Bulletin 2025/41**

(21) Application number: **24168550.2**

(22) Date of filing: **04.04.2024**

(51) International Patent Classification (IPC):
***A01N 43/36*** *(2006.01)* ***A01N 25/02*** *(2006.01)*
***A01N 1/02*** *(2006.01)* ***A01P 1/00*** *(2006.01)*
***A61K 31/00*** *(2006.01)*

(52) Cooperative Patent Classification (CPC):
(C-Sets available)
**A01P 1/00; A01N 1/124** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **LICIT Solutions GmbH**
**72074 Tübingen (DE)**

(72) Inventors:
- **JUST, Lothar**
**72076 Tübingen (DE)**
- **FEIL, Gerhard**
**73479 Ellwangen (DE)**
- **PIETRZIK, Nikolas**
**72076 Tübingen (DE)**
- **GLEISER, Corinna**
**72108 Rottenburg a. N. (DE)**
- **HIRT, Bernhard**
**72070 Tübingen (DE)**
- **WAGNER, Andreas Peter**
**72074 Tübingen (DE)**
- **NECKEL, Peter**
**72076 Tübingen (DE)**

(74) Representative: **Hoffmann Eitle**
**Patent- und Rechtsanwälte PartmbB**
**Arabellastraße 30**
**81925 München (DE)**

# (54) POLYETHYLENE GLYCOL AS AN ADDITIVE IN COMPOSITIONS FOR PRESERVATION AND/OR FIXATION CONTAINING THE PYRROLIDINE DERIVATIVE PY-C12

(57) The present invention pertains to a combination of a pyrrolidine derivative, such as Py-C12 and polyethylene glycol, compositions comprising the above combination as well as the use of this combination and a method using the combination for the preservation and/or fixation of biological material. Furthermore, this invention pertains to the use of polyethylene glycol for the reduction of permeability of barriers in biological material.

EP 4 627 921 A1

(52) Cooperative Patent Classification (CPC): (Cont.)

C-Sets
**A01N 43/36, A01N 25/02**

## Description

### FIELD OF THE INVENTION

The present invention pertains to a combination of a pyrrolidine derivative and polyethylene glycol, compositions comprising the above combination as well as the use of this combination and a method using the combination for the preservation and/or fixation of biological material. Furthermore, this invention pertains to the use of polyethylene glycol for the reduction of permeability of barriers in biological material caused by compounds used for preservation and/or fixation.

### BACKGROUND OF THE INVENTION

Due to their bifunctionality, pyrrolidine derivatives according to the invention, such as 5-*N*-carboxamido-2-pyrrolidone-*N*'-n-dodecyl propane-1,3-diamine, further referred to as Py-C12, are particularly suitable for the fixation and preservation of biological materials: On the one hand, the active compounds kill or inhibit the growth of microorganisms due to their biocidal efficacy and, on the other hand, they inhibit endogenous tissue-degrading enzymes secreted by the microorganisms.

5-N-carboxamido-2-pyrrolidone-*N*'-n-alkyl propane-1,3-diamines can be produced according to methods which are generally known in the state of the art, for example according to the method described in EP 3 174 849.

Pyrrolidine derivatives according to the invention, such as 5-*N*-carboxamido-2-pyrrolidone-*N*'-n-dodecyl propane-1,3-diamine (Py-C12) show a very good penetration performance in biological materials. The disadvantage of this property is that barriers of biological materials, such as human skin or wood, become more permeable to liquids. As a result, the fixed preparation unfavourably loses fluids.

Surprisingly, the addition of PEG significantly reduced the increased fluid leakage caused by compounds used for preservation and/or fixation such as Py-C12.

In patent PCT/EP2015/067113 pyrrolidine derivatives, such as Py-C12, are introduced as embalming agents yielding realistic haptics, visual impressions, and joint mobility while showing high anti-microbial activity and further coming with an inherent minimization of airborne exposure because of its non-volatility. Due to their low molecular weight and their amphiphilic character, the pyrrolidine derivatives have an especially high penetrative effect on biological materials and biological barriers (this includes membranes, cell-cell-contacts, extracellular matrix, barrier-forming biological compounds) in multicellular organisms and tissues, which is assumed to be one major pillar of its effectiveness.

This also translates to all intercellular and intracellular compartments and inner organs of the human body. Particularly regarding biological barriers as can be found within the human skin, this strong penetrative capacity compromises the skin barrier in e.g. Py-C12 fixed body donors The reduction of the barrier function in the case of body preparations also leads to the dislocation of the skin (local formation of fluid-filled blisters) described below. The blistering that occurs as a result of the fixation with pyrrolidine derivatives according to the invention was not to be expected.

This effect manifests in macroscopically visible circular to elliptic fluid-filled epidermal lesions (Figure 1). This effect could only be observed at the attachment of the epidermis, the most superficial skin layer. As a result, a continuous loss of fluid over time in Py-C12-fixed body donors was observed, which resulted in constant tissue dehydration. The fluid loss combined with the epidermal lesions can affect the overall aesthetic impression of fixed bodies in a setting for anatomic, scientific, or embalming purposes.

Surprisingly, the addition of polyethylene glycols (PEGs) significantly reduced the epidermal lesions of the skin and the increased fluid loss of the human corpse caused by the pyrrolidine derivatives according to the invention. It was found, that PEG, significantly reduces the induced lesions of fixed skin barrier. This effect was not expected, as PEGs are known to promote penetration through human skin. For this reason, PEGs are often used in cosmetic products and in pharmacological applications. The properties of PEG make it possible for solutions containing the pyrrolidine derivatives according to the invention to be used as fixative or in embalming solutions also in the field of funeral services. Both increased fluid loss of the fixed bodies and partial epidermolysis are otherwise not suitable for this area for aesthetic reasons.

This additionally observed effect is thus especially relevant for the application in the preservation and fixation of biological materials from human bodies. Stopping the post mortal decay of organic tissues is the essential purpose of embalming human bodies for anatomical, scientific or funeral intentions. Anatomical preservation of human bodies is mainly needed for the macroanatomical practical training of medical students (dissection courses) or in the education of surgeons and is thus required to last for several months. In embalming for funeral purposes, a much smaller time span of preservation with a life-like impression is needed, e.g. days to weeks. Dissection courses in the anatomical education of medical students and surgeons are the core component for developing a comprehensive understanding of the human body and the necessary skill sets. To stop the post mortal decay over several months allowing subsequent dissection of intact human tissue while maximizing anti-microbial safety, embalming solutions for anatomical purposes based on formaldehyde are mostly used. Embalming for funeral purposes aims to stop the post mortal decay for one to two weeks

and is commonly performed in a two-step approach. First, specific embalming solutions for funeral purposes are injected both into the blood vessel system and in several body cavities while draining spare body fluids. The second step consists of modelling the body in a life-like appearance. The specialized embalming solutions for funeral purposes in the first step are mixtures of several chemicals ranging from glutaraldehyde and phenols to formaldehyde, alcohols, glycerine and colouring agents with varying concentrations depending on their purpose. Formaldehyde based embalming solutions for funeral purposes are commonly used for viewings and thus buried bodies injected with these solutions pose not only a problem to occupational safety but moreover by increasing accumulation to ground water and sewage systems.

Besides the common disadvantages of formaldehyde fixed human body donors, such as highly elevated joint rigidity, unrealistic alteration of haptics and colour of inner organs, the World Health Organization stated the cancerous potential of formaldehyde vapours. Thus, working with formaldehyde fixed human body donors in the European Union requires increasing technical precautions in order to minimize the exposure of formaldehyde vapours and skin contact.

Developing improved fixation and preservation compounds that are highly effective and in the same time being less toxic and less problematic for the environment is thus an ongoing task. Moreover, the development of alternative embalming solutions for both anatomical and funeral purposes to stop the post mortal decay while guaranteeing occupational safety is becoming an urgent matter.

## SUMMARY OF THE INVENTION

Above objects are solved by a combination according to the present invention of a compound according to formula (Ia)

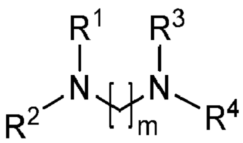
(Ia)

with

m being an integer from 1 to 6, preferably 3, and

$R^1$ = H,

$R^2$ is according to formula (II)

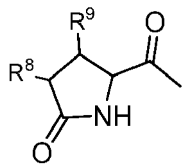

formula (II),

with $R^8$ and $R^9$ being

H, $CH_3$, $C_2H_5$,

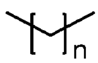,

with n being an integer from 1 to 6, XH,

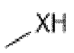, 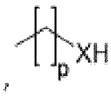, 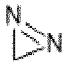, or 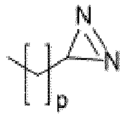,

with p being an integer from 1 to 20 and with X being O, N or S , preferably $R^8$ and $R^9$ are H, $CH_3$, $C_2H_5$, or

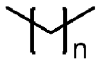,

with n being an integer from 1 to 3, more preferably $R^8$ and $R^9$ are H, and

wherein one of $R^3$ and $R^4$ is

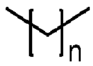,

with n being an integer from 6 to 12, preferably 10 or 12,

and the other being H, and polyethylene glycol, preferably for preservation and/or fixation of biological material, since it was found that the compounds according to formula (Ia) are valid and less toxic alternatives for preservation and fixation substances, such as formaldehyde. Certain flaws of these compounds can be surprisingly compensated by the addition of PEG to obtain an improved system for preservation and fixation for biological material which is not only less toxic than other alternatives but also allows for improved haptics and optics of the preserved and /or fixed preparations.

Above objects are also solved by compositions comprising the above combination as well as the use of this combination and a method using the combination for the preservation and/or fixation of biological material.

Object of the invention is also the use of polyethylene glycol, preferably of formula (III), for the reduction of permeability of barriers in biological materials, for gases and/or liquids, preferably for liquids, especially water.

Other objects, features, advantages and aspects of the present invention will become apparent to those skilled in the art from the following description and appended claims. It should be understood, however, that the following description, appended claims, and specific examples, which indicate preferred embodiments of the application, are given by way of illustration only. Various changes and modifications within the spirit and scope of the disclosed invention will become readily apparent to those skilled in the art from reading the following.

## DEFINITIONS

As used herein, the following expressions are generally intended to preferably have the meanings as set forth below, except to the extent that the context in which they are used indicates otherwise.

The expression "comprise", as used herein, besides its literal meaning also includes and specifically refers to the expressions "consist essentially of" and "consist of". Thus, the expression "comprise" refers to embodiments wherein the subject-matter which "comprises" specifically listed elements does not comprise further elements as well as embodiments wherein the subject-matter which "comprises" specifically listed elements may and/or indeed does encompass further elements. Likewise, the expression "have" is to be understood as the expression "comprise", also including and specifically referring to the expressions "consist essentially of' and "consist of".

The term "biological barrier" refers to barriers in multicellular organisms and tissues and includes membranes, cell-cell-contacts, extracellular matrix, barrier-forming biological compounds against penetration of gases or liquids, preferably liquids, especially water.

The term "biological material" refers to living and dead organisms, organs, biological tissues and cells thereof as well as components of biological components that can be derived from the building blocks of life.

Organisms include unicellular and multicellular life forms such as mycoplasma, bacteria, archaebacteria, algae, fungi, plants, animals and humans. The building blocks of life include molecules and macromolecules, which include carbohydrates, amino acid compounds, nucleic acids and biological fats and oils.

The term "biological material" also includes viruses and phages as well as intracellular and extracellular components such as cellulose, keratin, lignin, chitin, elastin, collagen and proteoglycans.

The term "biological material" also includes wood, blood, serum and plasma as well as foodstuffs of all kinds that

may be produced from nature-identical and/or modified components.

The term "biological material" also includes modified material such as leather, parchment or petroleum as well as composites of biological and non-biological components such as wood-plastic composites.

The term "preservation and/or fixation of biological material" does not include any therapeutic methods on living patients. The preservation and/or fixation of biological material from microbes, fungi, plants, animals or human bodies is an *in vitro* or ex *vivo* method.

## FIGURES

**Figure 1** Small fluid filled epidermal lesion 56 days after injection with a Py-C12 solution.
**Figure 2** shows a diagram of the percentual weight loss after 56 days of two groups of human body donors fixed with a Py-C12 solution with and without 105 g per kg body weight PEG400 as an additive.

## DETAILED DESCRIPTION OF THE INVENTION

The present invention pertains to the combination of

- a compound according to formula (Ia)

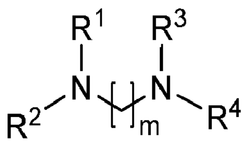 (Ia)

with

m being an integer from 1 to 6, preferably 3, and
$R^1$ = H,
$R^2$ is according to formula (II)

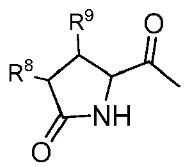

formula (II),

with $R^8$ and $R^9$ being H, $CH_3$, $C_2H_5$,

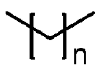 ,

with n being an integer from 1 to 6, XH,

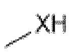 , 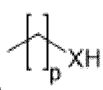 , 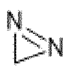 , or 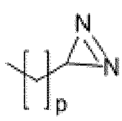 ,

with p being an integer from 1 to 20 and with X being O, N or S , preferably $R^8$ and $R^9$ are H, $CH_3$, $C_2H_5$, or

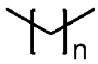,

with n being an integer from 1 to 3, more preferably $R^8$ and $R^9$ are H, and
wherein one of $R^3$ and $R^4$ is

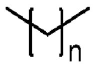,

with n being an integer from 6 to 12, preferably 10 or 12,
and the other being H, and

- polyethylene glycol, preferably for preservation and/or fixation of biological material.

Preferably the combination does not contain a mixture of different compounds according to formula (Ia). Thus, the combination or a composition comprising the combination preferably comprises one compound according to formula (Ia) and polyethylene glycol.

In a preferred embodiment the combination comprises Py-C12 and polyethylene glycol. The combination, preferably for preservation and/or fixation of biological material, thus preferably comprises the compound according to formula (I)

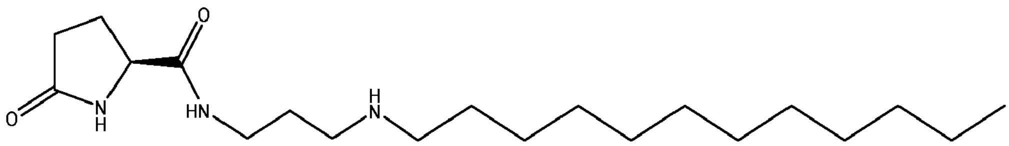

(I)

and polyethylene glycol.

Polyethylene glycols (PEGs), also known as macrogols, are liquid or solid polyethers of the general formula $H(OCH_2CH_2)_nOH$, where n is greater or equal to four. Each PEG is followed by a number, e.g., PEG 3350, which refers to the weight average molecular weight of the polymer. PEGs are also widely used as lubricants and in hair and cosmetic preparation. The polyethylene glycols used may in principal be substituted PEGs that may have various functional groups.

However, the polyethylene glycol preferably is a polyethylene glycol according to formula (III)

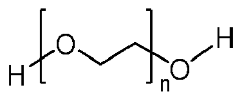 (III),

preferably wherein n = 2 to 900, preferably 5 to 450 or with a weight average molecular weight from 75 g/mol to 40000 g/mol, more preferably with an weight average molecular weight from 200 g/mol to 20000 g/mol, more preferably 200 g/mol to 10000 g/mol, especially preferably 200 g/mol to 8000 g/mol, most preferably 200 g/mol to 600 g/mol.

The combination for preservation and/or fixation is preferably used in a solution comprising at least one solvent or as a composition that may comprise further additives. Part of the invention thus also is a solution or a composition comprising a combination according to the invention.

The mass concentration of the components in the combination or the composition are preferably 0.01 % to 30 % of a compound according to formula (Ia) or formula (I) and 0.01 % to 60 % polyethylene glycol.

Additives that may be used in a composition according to the invention may be for example buffers, wetting agents, anticoagulants, complex builders, solvents, flow agents, osmolytes, dyes, perfuming agents, muscle relaxants or absorber. Suitable solvents may be all solvents known to the person skilled in the art, such as water or alcohol, preferably thus typically used in preservation and/or fixation solutions. Especially preferred as solvents are alcohols, preferably ethanol and 2-propanol.

In an especially preferred embodiment the composition consists of a 5-*N*-carboxamido-2-pyrrolidone-*N'*-n-dodecyl propane-1,3-diamine and polyethyleneglycol and optionally a solvent. Optionally the composition additionally comprises the additives as listed above.

The composition may be any composition, such as a solution, a cream, an ointment, gel or fluid etc., to be applied

on or in biological material. In single preferred embodiments, the composition is a wood preservative or an embalming or fixation solution.

The invention also pertains to the use of a combination or a composition according to the invention for the preservation and/or fixation of biological material, wherein the biological material is preferably selected from the group of living and dead organisms, preferably selected from unicellular and multicellular life forms such as mycoplasma, bacteria, archaebacteria, algae, fungi, plants, animals and humans, organs, biological tissues and cells thereof as well as components of natural or modified biological components such as carbohydrates, amino acid compounds, nucleic acids and biological fats and oils, preferably intracellular and extracellular components such as cellulose, keratin, lignin, chitin, elastin, collagen and proteoglycans, wood, blood, serum, plasma, leather, parchment or petroleum . The biological material referred to may also be present, e.g. as a composite material, in combination with non-biological components.

In a preferred embodiment the combination or composition is used for the preservation of biological materials derived from plants, especially wood. In this embodiment the polyethylene glycol preferably has a weight average molecular weight between 8000 g/mol to 20000 g/mol. Alternatively the polyethylene glycol in this embodiment preferably has a weight average molecular weight between 75 g/mol to 2000 g/mol, preferably 75 g/mol to 800 g/mol. Such a composition thus is a wood preservative comprising the combination according to the invention.

In an especially preferred embodiment the combination or composition according to the invention is used for the preservation and/or fixation of cells, tissues, organs or organisms obtained from microbes, animals or human bodies, preferably animals or human bodies, more preferably for embalming of animals or human bodies.

In one embodiment the combination or composition, preferably a cream or ointment, is used for the preservation of biological material derived from animals or human bodies, preferably for the preservation of fixed body preparations, wherein the polyethylene glycol has a weight average molecular weight between 75 g/mol to 1500 g/mol or mixtures thereof. Preferably a mixture of PEG300 and PEG1500 is used.

In another embodiment the combination or composition is used for preservation and fixation of animals or human bodies, preferably for embalming of human bodies and the polyethylene glycol has a weight average molecular weight of 200 g/mol, 300 g/mol, 400 g/mol, 500 g/mol or 600 g/mol, more preferably 400 g/mol. Such a composition thus is an embalming and/or fixation solution or composition comprising the combination according to the invention.

For the use for the preservation of fixed body preparations the composition may preferably be used as such that the amount added to the respective biological material corresponds to 2 to 10 grams of a compound according to formula (Ia) or according to formula (I) and 50 to 150 gram polyethylene glycol per kilogram of biological material, e.g. body weight.

Further object of the invention is a method for preservation and/or fixation of biological material, wherein the method comprises the application of a combination or a composition according to the invention on or in biological material, preferably selected from of living and dead organisms, preferably selected from unicellular and multicellular life forms such as mycoplasma, bacteria, archaebacteria, algae, fungi, plants, animals and humans, organs and biological tissues thereof as well as components of natural or modified biological components such as carbohydrates, amino acid compounds, nucleic acids and biological fats and oils, preferably intracellular and extracellular components such as cellulose, keratin, lignin, chitin, elastin, collagen and proteoglycans, wood, blood, serum, plasma, leather, parchment or petroleum.

A further object of the invention is the use of polyethylene glycol, preferably of formula (III), for the reduction of permeability of biological barriers for gases and/or liquids, preferably for liquids, especially water, in biological materials, preferably of living and dead organisms, preferably selected from unicellular and multicellular life forms such as mycoplasma, bacteria, archaebacteria, algae, fungi, plants, animals and humans, organs and biological tissues thereof.

Preferably, polyethylene glycol is used, for the reduction of tissue dehydration and/or reduction of epidermolysis in a method for preservation and/or fixation of biological material, preferably of cells, tissues, organs or organisms obtained from microbes, animals or human bodies, preferably for embalming of human bodies. The polyethylene glycol at least reduces the tissue dehydration and/or epidermolysis which is caused by the compound according to formula (Ia) or (I).

## EXAMPLES

The following examples show effects of PEG400 as an additive in Py-C12 fixative solutions on human body donors. In addition, it is demonstrated that PEG400 does not influence the strong anti-microbial effect of Py-C12.

### Example 1: Effect of polyethylene glycols on Py-C12 induced epidermal lesions

Adding polyethylene glycols to Py-C12 fixative solution significantly reduces Py-C12 induced epidermal lesions while maintaining its strong anti-microbial activity.

Macroscopically a few days after fixation with a Py-C12 solution a diffuse pattern of small fluid-filled epidermal lesions arose along the entire body surface, see FIG. . For analysing a potential effect of PEG400 as an additive on the Py-C12 induced epidermal lesions regarding their reduction or prevention, two human body donors were fixed with a solution comprising Py-C12 and PEG400 in a ratio of ~ 1:15 with a total injection volume of 35 % in litres per kilogram body weight.

Two human body donors fixed with a respective Py-C12 solution without PEG400 as an additive served as a control group. During the whole study the human body donors were stored in body bags at constant atmosphere and temperature (17 °C - 19 °C) without immersion of any kind and without application of any external chemicals. The observation period for each body donor spanned 50 to 51 days after injection and ended with a final quantitative assessment of the epidermal lesions.

Given that most of the lesion's base areas appeared in an elliptic shape, the semi-major and semi-minor axis of every lesion were measured for each body donor. The epidermal lesion's base areas were approximated by using the surface area formula of an ellipse. For interindividual comparability all calculated epidermal lesion's base areas of each body donor were then divided by the estimated whole-body surface area as shown by Du Bois and Du Bois, further termed as percentual epidermal lesion area (ela %) (Du Bois, D. & Du Bois, E. F. "A formula to estimate the approximate surface area if height and weight be known. 1916". Nutrition, 5(5):303-311; discussion 312-3. 1989).

Evaluation

The statistical evaluation focused on a potential reduction of the percentual epidermal lesion area of the experimental group, Py-C12 solution blended with PEG400-additive, in comparison to the control group, i.e., Py-C12 solution without PEG400-additive. Therefore, an analysis of the combined percentual epidermal lesion areas of each group was performed.

The distributions of the percentual epidermal lesion areas of both groups approximately follow a log-normal distribution, $p_{\text{without additive}} = 0.6003$ and $P_{(\text{Py-C12+PEG400})} = 0.3556$ by D'Agostino und Pearson. The comparison of the means of both groups logarithmised percentual epidermal lesion areas by a Welch's t test showed a significant reduction in the Py-C12+PEG400-group, see Table 1. This corresponds to a reduction of the geometric mean of the experimental group, $\mu_{(\text{Py-C12+pEG400})}$, by a factor of 0.48 (*÷1.3) - geometric SD factor, compared to the geometric mean of the control group, $\mu_{\text{without additive}}$, p=0.0063.

Therefore, it was concluded that adding PEG to a Py-C12 solution to fix human body donors leads to a significant reduction of Py-C12 induced epidermal lesions and thus poses a benefit in fixation quality.

**Table 1** PEG as an additive to a Py-C12 fixative solution leads to a significant reduction of the percentual epidermal lesion area (ela %).

| Fixative solution | $\bar{x}$ - log (mean of ela %) | Welch's t test (p) | μ - geometric mean of ela % |
|---|---|---|---|
| Py-C12 without additive | -0.8335 | 0.0063 | 0.1467 |
| Py-C 12+PEG400 | -1.156 | | 0.07 |

Calculation of the geometric mean μ and $\bar{x}$, the mean of the logarithmised datapoints of ela %.

$$\mu = antilog\left(\frac{1}{n}\sum_{i=1}^{n} \log(\text{ela }\%_i)\right)$$

$$\bar{x} = \frac{1}{n}\sum_{i=1}^{n} \log(\text{ela }\%_i) \quad and \quad \mu = antilog\,(\bar{x})$$

With n being the total number of all data points of one group.

**Example 2: Effect of polyethylene glycols on Py-C12 induced weight loss**

Adding polyethylene glycols as additives to Py-C12 based fixative solutions lead to increased fluid retention in human body donors. Potential effects of fluid retention of PEG as an additive were analysed by measuring the weight of nine human body donors fixed with a Py-C12 solution consisting of Py-C12 and PEG400in a ratio of ~ 1:15 with a total injection volume of 35 % in litres per kilogram body weight. The control group was composed of five human body donors fixed with a respective Py-C12 solution without adding PEG400.

The body donors were weighed directly after fixation and the results were chosen as the starting point. During the whole study the human body donors were stored in body bags at constant atmosphere and temperature (17 - 19 °C) without immersion of any kind and without application of any external chemicals. The observation period for each body donor spanned 56 days and ended with a final weight measurement.

Evaluation

For interindividual comparability, the distribution of the percentual weight loss relative to the measured weight directly after fixation was analysed.

For both groups a normal distribution was assumed in the following analysis, $p_{KS} > 0.1$ after Kolmogorov-Smirnov test. The comparison of means yielded a significantly reduced percentual weight loss, 8.4 % ± 3.5 % SD, after adding PEG400 to a Py-C12 fixative solution. A Welch's t test with p = 0.0342 and a 95 % confidence interval of [0.7541 %;16.11 %] was used for comparison (FIG. 2).

Adding PEG led to a significantly reduced percentual weight loss after 56 days, (*) p = 0.0342, and thus to a reduced fluid loss. Bars indicate means and standard deviation.

**Example 3: Biocidal efficacy of Py-C12 solutions and of Py-C12 solutions with polyethylene glycol and ethanol**

To demonstrate the biocidal efficacy of solutions containing the active ingredient Py-C12 and of mixed solutions containing the active ingredient Py-C12 as well as polyethylene glycol and ethanol, certified efficacy tests were conducted according to DIN EN 13727:2015 (*DIN EN 13727:2015-12*). The bactericidal efficacy against the test organisms *Staphylococcus aureus* ATCC 6538, *Enterococcus hirae* ATCC 10541, *Escherichia coli* K12 NCTC 10538 and *Pseudomonas aeruginosa* ATCC 15442 was tested.

According to the standard DIN EN 13727:2015, the criterion for the effectiveness of a test solution against bacteria is an inactivation of the test organisms of more than 99.999 %. This corresponds to a reduction factor (RF) ≥ 5 log10 levels.

Py-C12 solutions

Py-C12 solutions were tested for bactericidal activity at concentrations ranging from 0.1 % to 2.0 % (w/v). The exposure time was 15 minutes and 60 minutes, respectively. The organic load was dirty conditions (3.0 g/L bovine serum albumin + 3.0 ml/L sheep erythrocytes). The test bacteria were sufficiently inactivated (RF ≥ 5) with the following concentrations and reduction factors (RF):

*Staphylococcus aureus* Py-C12 0.1 % (w/v), RF ≥ 5.39 (15 + 60 minutes);
*Enterococcus hirae* Py-C12 0.1 % (w/v), RF ≥ 5.40 (15 + 60 minutes);
*Escherichia coli* Py-C12 0.25 % (w/v), RF ≥ 5.34 (15 minutes) and 0.1 % (w/v), RF ≥ 5.34 (60 minutes);
*Pseudomonas aeruginosa* Py-C12 0.5 % (w/v), RF ≥ 5.15 (15 minutes) and 0.5 % (w/v), RF ≥ 5.32 (60 minutes).

Mixed solutions with Py-C12, PEG400 and ethanol

Mixed solutions contained Py-C12 at an effective concentration of 0.1 % to 1.0 % (w/v) and PEG400 from 1.0 % to 15 % (w/v) and ethanol from 2.0 % to 30 % (w/v). The exposure time was 60 minutes. The organic load was dirty conditions (3.0 g/L bovine serum albumin + 3.0 ml/L sheep erythrocytes). All tested mixed solutions with Py-C12, PEG400 and ethanol in different concentrations achieved sufficient inactivation of the test bacteria, each with the following reduction factors:

*Staphylococcus aureus* RF ≥ 5.42;
*Enterococcus hirae* RF ≥ 5.44;
*Escherichia coli* RF ≥ 5.48;
*Pseudomonas aeruginosa* RF ≥ 5.48.

As a control, mixed solutions without Py-C12 containing PEG400 from 1.0 % to 10 % (w/v) and ethanol from 2.0 % to 20 % (w/v) were tested for bactericidal efficacy. For none of the test solutions a standard-compliant inactivation (RF ≥ 5) of the test bacteria was achieved: *Staphylococcus aureus* RF ≤ 3.04;

*Enterococcus hirae* RF ≤ 3.07;
*Escherichia coli* RF ≤ 3.11;
*Pseudomonas aeruginosa* RF ≤ 3.10.

Conclusion

Efficacy tests for bactericidal activity according to DIN EN 13727:2015 showed that the admixture of polyethylene glycol and ethanol in different concentration ratios does not interfere with the biocidal efficacy of solutions containing Py-C12.

**Overall conclusion**

Adding PEGs to Py-C12 solutions unexpectedly led to a significant reduction of epidermal lesions in human body donors improving the overall aesthetic impression. The admixture of polyethylene glycols does not interfere with the biocidal efficacy of Py-C12 solutions. Furthermore, human body donors fixed with Py-C12 solutions with PEGs as an additive led to a significantly reduced weight loss.

This unprecedented overall improvement of the fixation and preservation outcome by the combination of pyrrolidone derivatives and PEG is due to the physico-chemical properties of the combined compounds.

## Claims

**1.** Combination of a compound according to formula (Ia)

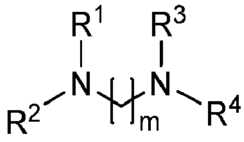
(Ia)

with

m being an integer from 1 to 6, preferably 3, and
$R^1$ = H,
$R^2$ is according to formula (II)

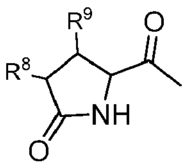
formula (II),

with $R^8$ and $R^9$ being
H, $CH_3$, $C_2H_5$,

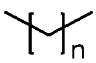,

with n being an integer from 1 to 6,
XH,

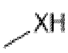, 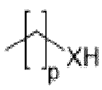, 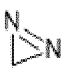, or 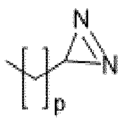,

with p being an integer from 1 to 20 and with X being O, N or S, and
wherein one of $R^3$ and $R^4$ is

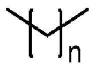 ,

with n being an integer from 6 to 12, and the other being H, and polyethylene glycol, preferably for preservation and/or fixation of biological material.

2. Combination according to claim 1, of a compound according to formula (I)

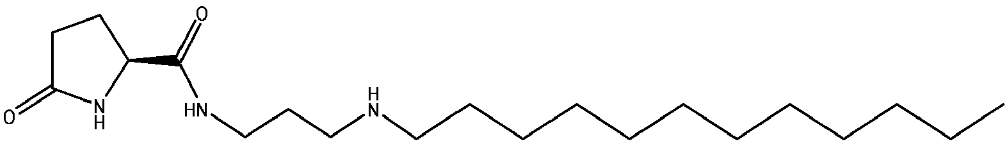

(I)

and polyethylene glycol, preferably for preservation and/or fixation of biological material.

3. Combination according to claim 1 or 2, **characterized in that** the polyethylene glycol is a polyethylene glycol according to formula (III)

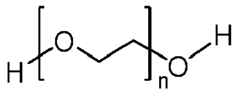 (III)

with a weight average molecular weight from 75 g/mol to 20000 g/mol, preferably 200 g/mol to 8000 g/mol, more preferably 200 g/mol to 600 g/mol.

4. Composition comprising the combination according to claims 1 to 3.

5. Composition according to claim 4, **characterized in that** the composition is a wood preservative or an embalming or fixation composition.

6. Use of a combination according to any of the preceding claims 1 to 3 or a composition according to claims 4 to 5 for the preservation and/or fixation of biological material.

7. Use according to claim 6, **characterized in that** the biological material is selected from the group of living and dead organisms, preferably selected from unicellular and multicellular life forms such as mycoplasma, bacteria, archaebacteria, algae, fungi, plants, animals and humans, organs, biological tissues and cells thereof as well as components of natural or modified biological components such as carbohydrates, amino acid compounds, nucleic acids and biological fats and oils, preferably intracellular and extracellular components such as cellulose, keratin, lignin, chitin, elastin, collagen and proteoglycans or wood, blood, serum, plasma, leather, parchment or petroleum.

8. Use according to claim 7, **characterized in that** the preservation and/or fixation of biological material from animals or human bodies is an *in vitro* or ex *vivo* method.

9. Use according to claim 7, for the preservation of biological material derived from plants, especially wood.

10. The use according to claim 7 or 8, for the preservation and/or fixation of cells, tissues, organs or organisms obtained from microbes, animals or human bodies, preferably for the preservation of fixed body preparations, **characterized in that** the polyethylene glycol has a weight average molecular weight between 300 g/mol to 1500 g/mol or mixtures thereof.

11. The use according to claim 7 or 8, for the preservation of biological material derived from animals or human bodies, preferably for embalming of human bodies, **characterized in that** the polyethylene glycol has a weight average molecular weight of 200, 300, 400, 500 or 600 g/mol, more preferably 400 g/mol.

**12.** A method for preservation and/or fixation of biological material, **characterized in that** the method comprises the application of a combination according to claims 1 to 3 or a composition according to claims 4 or 5 on or in the biological material.

**13.** The use of polyethylene glycol, preferably of formula (III) for the reduction of permeability of barriers in biological materials, preferably for liquids, especially water.

**14.** The use of polyethylene glycol, preferably according to claim 13, for the reduction of tissue dehydration and/or reduction of epidermolysis in a method for preservation and/or fixation of biological material, preferably of cells, tissues, organs or organisms obtained from microbes, animals or human bodies, preferably for embalming of human bodies.

**15.** The use according to claim 14, **characterized in that** the tissue dehydration and/or the epidermolysis is caused by a compound according to formula (Ia) or (I).

Figures

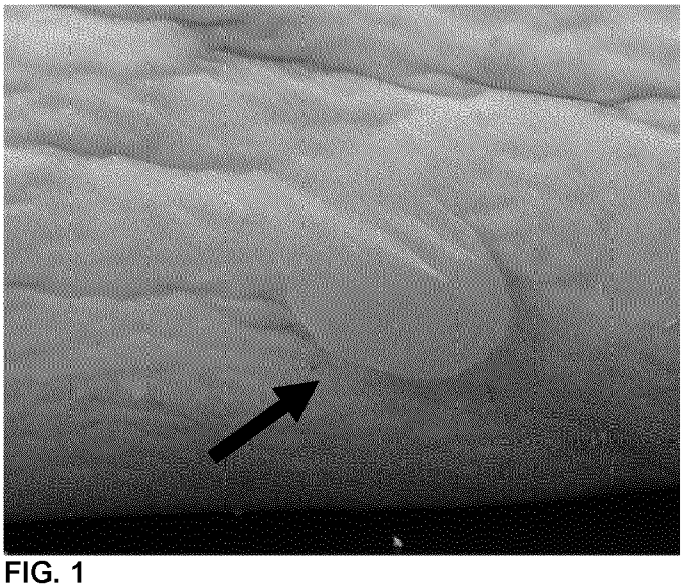

FIG. 1

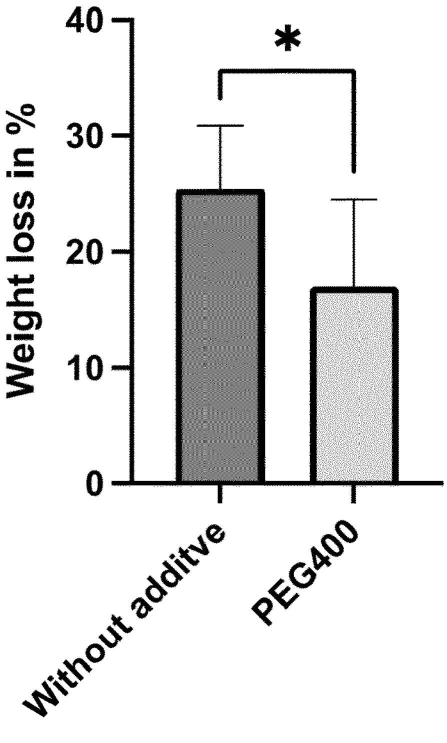


FIG. 2

Europäisches Patentamt
European Patent Office
Office européen des brevets

# EUROPEAN SEARCH REPORT

Application Number
EP 24 16 8550

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VESTA VALUCKAITE ET AL: "High molecular weight polyethylene glycol (PEG 15-20) maintains mucosal microbial barrier function during intestinal graft preservation", JOURNAL OF SURGICAL RESEARCH, vol. 183, no. 2, 1 August 2013 (2013-08-01), pages 869-875, XP055297278, US ISSN: 0022-4804, DOI: 10.1016/j.jss.2013.02.035 | 13,14 | INV. A01N43/36 A01N25/02 A01N1/02 A01P1/00 A61K31/00 |
| A | * abstract * * page 873, left-hand column, paragraph 1 * * page 870, left-hand column, paragraph 3 * ----- | 15 | |
| X | PATEL MADHUMITA ET AL: "Rediscovery of poly(ethylene glycol)s as a cryoprotectant for mesenchymal stem cells", BIOMATERIALS RESEARCH, vol. 27, no. 1, 9 February 2023 (2023-02-09), XP093194561, London, UK ISSN: 2055-7124, DOI: 10.1186/s40824-023-00356-z Retrieved from the Internet: URL:https://biomaterialsres.biomedcentral.com//biomaterialsres.biomedcentral.com/counter/pdf/10.1186/s40824-023-00356-z.pdf> | 13,14 | TECHNICAL FIELDS SEARCHED (IPC) A01N A61K |
| A | * abstract * * page 5, paragraph "Results" * * page 10, paragraph "Discussion" - paragraph "Conclusion" * ----- -/-- | 15 | |

The present search report has been drawn up for all claims

1

| Place of search | Date of completion of the search | Examiner |
|---|---|---|
| Munich | 20 August 2024 | Marie, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 24 16 8550

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 272 554 A1 (UNIV EBERHARD KARLS TUEBINGEN [DE]) 8 November 2023 (2023-11-08) * claims 1-15 * * page 6, paragraph 38 * * page 7, paragraph 57 * ----- | 1-15 | |
| A,D | WO 2016/016168 A1 (EBERHARD KARLS UNI TUEBINGEN MEDIZINISCHE FAKULTAET [DE]) 4 February 2016 (2016-02-04) * claims 1-14 * ----- | 1-15 | |
| A | DISCH K: "Glucoprotamine - a new antimicrobial substance", ZENTRALBLATT FUER HYGIENE UND UMWELTMEDIZIN, STUTTGART, DE, vol. 1995, 1 January 1994 (1994-01-01), pages 357-365, XP009149509, ISSN: 0934-8859 * abstract * ----- | 1-15 | |

TECHNICAL FIELDS SEARCHED (IPC)

The present search report has been drawn up for all claims

1

| Place of search | Date of completion of the search | Examiner |
|---|---|---|
| Munich | 20 August 2024 | Marie, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 16 8550

This annex lists the patent family members relating to the patent documents cited in the above-mentioned European search report. The members are as contained in the European Patent Office EDP file on
The European Patent Office is in no way liable for these particulars which are merely given for the purpose of information.

20-08-2024

| Patent document cited in search report | Publication date | Patent family member(s) | Publication date |
|---|---|---|---|
| EP 4272554 A1 | 08-11-2023 | EP 4272554 A1 | 08-11-2023 |
| | | EP 4272555 A1 | 08-11-2023 |
| | | EP 4272556 A1 | 08-11-2023 |
| | | TW 202406457 A | 16-02-2024 |
| | | WO 2023213881 A1 | 09-11-2023 |
| WO 2016016168 A1 | 04-02-2016 | CN 106714555 A | 24-05-2017 |
| | | DE 102014110783 A1 | 04-02-2016 |
| | | EP 3174390 A1 | 07-06-2017 |
| | | US 2017137379 A1 | 18-05-2017 |
| | | US 2019161446 A1 | 30-05-2019 |
| | | WO 2016016168 A1 | 04-02-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3174849 A
- EP 2015067113 W

### Non-patent literature cited in the description

- **DU BOIS, D.** ; **DU BOIS, E. F.** A formula to estimate the approximate surface area if height and weight be known. 1916. *Nutrition*, 1989, vol. 5 (5), 303-311